# EUROPEAN PATENT SPECIFICATION

(11) **EP 0 922 332 B1**
(45) Date of publication and mention of the grant of the patent: **16.01.2002**
(21) Application number: 97934629.3
(22) Date of filing: 01.08.1997
(51) Int. Cl.: H03K 23/66, G06F 7/68, H03K 23/68, G06F 7/66

(54) **FREQUENCY DIVIDING CIRCUIT**
FREQUENZTEILERSCHALTUNG
CIRCUIT DIVISEUR DE FREQUENCES

(30) Priority: 28.08.1996 GB 9618069
(43) Date of publication of application: 16.06.1999
(73) Proprietor: TTPCOM LIMITED, Royston, Hertfordshire, SG8 6EE (GB)
(72) Inventor: FOGG, Andrew, Bedfordshire SG19 3AD (GB)
(74) Representative: Haley, Stephen
(86) International application number: GB9702081
(87) International publication number: WO9809379

(56) References cited:
- GB-A- 2 239 115
- US-A- 3 828 169
- US-A- 3 976 945
- US-A- 4 365 201
- US-A- 5 202 642

## Description

This invention relates to frequency dividing circuits of the type which provide an output signal representing the division of the frequency of an input signal by a divisor.

Many electronic systems require the generation of signals whose frequencies are in some fixed relationship with a master frequency. Where the required relationship between such frequencies takes the form of division by a rational number (that is, a number expressible as a ratio of two integers), the conventional method of performing the division, when good spectral purity is required in the output signal, makes use of a phase-locked-loop circuit employing a voltage-controlled oscillator to produce the final output frequency. Standard direct division techniques have poor spectral purity because of period jitter in the output signal. In many applications, including, but not restricted to, mobile radio communications, the additional cost and power consumption of an additional voltage-controlled oscillator impose significant design penalties, but good spectral purity is essential.

US-A-5202642 discloses a frequency dividing circuit suitable for performing division by any rational number, the circuit including a digital accumulator and overflow detection means.

It is an object of the present invention to provide a method and circuit which can divide the frequency of an input signal by a rational factor without the need for the voltage-controlled oscillator associated with known frequency division techniques, yet which still provides good spectral purity.

According to the present invention there is provided a frequency-dividing circuit comprising:
a digital accumulator capable of performing a signed arithmetic;
means for adding of a predetermined numerator to the content of the accumulator;
means for subtracting a predetermined denominator from the content of the accumulator;
means for detecting if the value held in the accumulator has become zero or negative and establishing a delay setting value dependent upon the held value;
means for converting the delay setting value into a time delay inversely proportional to the magnitude of the delay setting value;
means for changing the state of a digital output signal on expiry of the said time delay.

The circuit may further comprise means for setting the components of the circuit to a defined starting condition.

The numerator and denominator values may be provided by hard wiring, from separate registers and/or from a microprocessor, for example.

The circuit may be arranged so that the subtraction of the divisor denominator from the accumulator is caused by each consecutive active transition of the input signal, and so that detection of a zero or negative value in the accumulator occurs immediately upon its establishment. The circuit may also be arranged so that registration of the delay setting value, together with addition of the divisor numerator to the accumulator and triggering of the delay setting value-to-delay conversion means, occur immediately upon zero or negative value detection, and so that, upon expiry of the said time delay period, the state of the output signal is complemented.

The circuit may also be arranged so that the inverse relationship of the time delay period to the delay setting value is constructed to be such that the time delay interpolates the required timing of the output transition appropriately between active transitions of the input signal so as to yield output transitions representing exactly the required frequency division from the input signal at a 50:50 mark:space ratio.

The circuit may be realised in hardware, software on a processor, or a combination thereof.

A corresponding method is also provided.

An example of the present invention will now be described with reference to the accompanying drawing in which:-
Figure 1 is a circuit diagram depicting the main circuit elements of an example of the invention and their primary interconnections; and
Figure 2 illustrates a particular embodiment of a time-delay means employed in the example of figure 1.

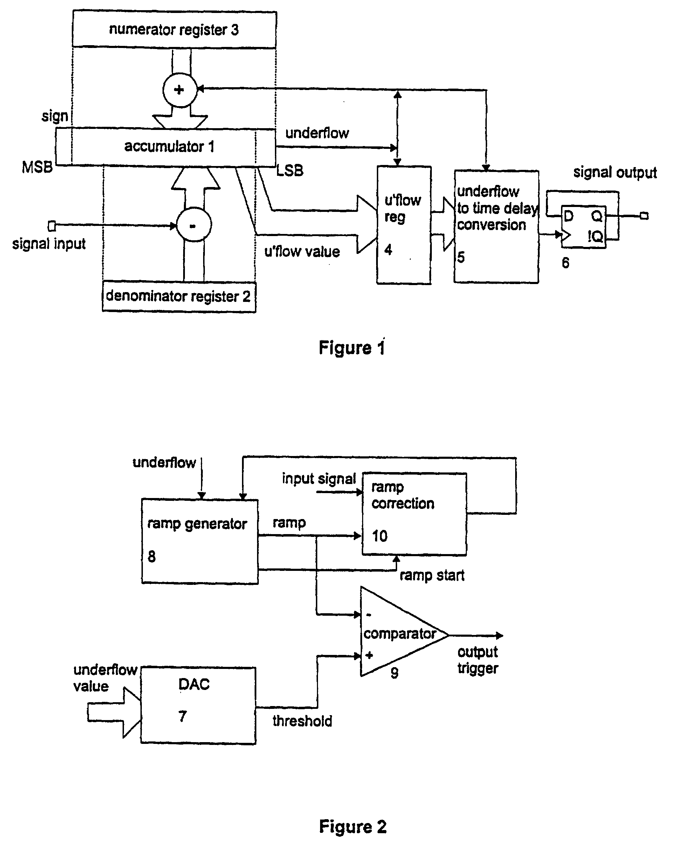

Referring to Figure 1, a binary digital accumulator 1 is arranged to hold at any time the numerical total resulting from the summation of previous denominator subtractions or numerator additions. A denominator register 2 holds the binary representation of the divisor denominator and, in a typical implementation, allows the denominator value to be loaded from a host microprocessor (not shown). A numerator register 3 holds the binary representation of the divisor numerator and in a typical implementation would allow the numerator value to be loaded from the host microprocessor. On each active transition of an input signal (which may be the rising edge or the falling edge) the divisor denominator value is subtracted from the previous content of the accumulator 1. If the content of the accumulator 1 remains positive, no further action takes place until the next input signal active transition. If the subtraction causes the content of the accumulator to become zero or negative, this underflow is sensed and the value copied immediately to an underflow register 4 which holds the underflow as a delay setting value. Immediately following this action, the underflow to time delay conversion means 5 is triggered, and the numerator value is added to the accumulator 1, so that the accumulator 1 now contains the sum of the previous underflow and the divisor numerator.

On expiry of the said time delay, the output of the conversion means 5 triggers the output flipflop 6 to complement the state of the output signal. The time delay is scaled so that an underflow value of zero produces a delay of exactly one period of the input signal; larger underflow values yield smaller delays in inverse proportion to the magnitude of the underflow, such that an underflow of magnitude one greater than the maximum possible denominator value in any particular implementation of the circuit would yield zero time delay. The achievable delay is quantised by the number of bits in the denominator register 2, and during operation of the circuit takes values from that quantised range according to the prevailing denominator and numerator values. This generates the output transition times necessary to carry out the desired rational division of the input frequency with theoretically exact placement of the output transitions.

In any particular implementation of this circuit the achievable division ratios are governed by the numbers of binary bits in the numerator and denominator registers 3 and 2. The accumulator 1 must be able to accommodate at least the numerator value as a positive number and the denominator value as a negative number without loss of data. In the embodiment shown the denominator register 2 is offset from the accumulator 1 by one bit (the least significant bit of the denominator register 2 is aligned to the next-to-least significant bit of the accumulator 1) in order to correct for the implicit factor of two in the overall division caused by complementing the state of the output signal on each underflow rather than generating a short pulse.

Referring to Figure 2, an embodiment of the time-delay means 5 employs a digital-to-analog converter (DAC) 7, a ramp generator 8 and a level comparator 9. The underflow value from the underflow register 4 taken as an unsigned number is converted by the DAC 7 to a reference level on the positive input of the comparator 9. The reference level accordingly depends on the magnitude of the underflow, such that a large underflow value causes a high reference level and a small underflow causes a low reference level.

The ramp generator 8 produces a linear descending ramp starting at a voltage level corresponding to the level the DAC 7 would produce if it were capable of accepting one digital count above its actual full scale output and ending at the nominal zero-scale output of the DAC 7 exactly one period of the input clock signal later. This ramp begins as the underflow value has appeared on the output of the DAC 7 and forms the second (negative) input to the comparator 9. At the start of the ramp the output of comparator 9 is therefore low. When the descending ramp passes through the reference level from the DAC 7, the comparator output goes high and clocks the flipflop 6. Following the detection of the output transition point the ramp generator 8 is reset for in preparation for the next cycle. An optional refinement of the ramp generator 8 has a further ramp correction element 10 to sample the zero error of the descending ramp and adjust the ramp generator circuit 8 and/or the DAC 7 to produce a more accurate result on the next cycle of operation.

In embodiments of this invention using small numbers of binary bits in the registers and accumulator it is possible to fabricate the entire circuit in a manner suitable for operation at very high input frequencies, for instance as an integrated circuit (not shown).

In other embodiments of this invention, equivalent operation may be achieved by reversing the sense of arithmetic operation of the accumulator 1 and using the overflow as a delay setting value, and/or by reversing the sense of operation of the ramp generator 8 and DAC 7.

## Claims

1. A frequency-dividing circuit comprising:
a digital accumulator (1), capable of performing signed arithmetic;
means (1) for adding of a predetermined numerator to the content of the accumulator;
means (1) for subtracting a predetermined denominator from the content of the accumulator;
means for detecting if the value held in the accumulator (1) has become zero or negative and establishing a delay setting value dependent upon the held value;
means (5) for converting the delay setting value into a time delay inversely proportional to the magnitude of the delay setting value; and
means (5, 6) for changing the state of a digital output signal on expiry of the time delay.

2. A circuit according to claim 1, wherein the circuit comprises means for setting the components of the circuit to a defined starting condition.

3. A circuit according to claim 1 or claim 2, wherein the numerator and denominator values are provided from separate registers (2, 3).

4. A circuit according to claim 1 or claim 2, wherein the numerator and denominator values are provided from a microprocessor.

5. A circuit according to any of the preceding claims, wherein the circuit is arranged so that the subtraction of the divisor denominator from the accumulator (1) is caused by each consecutive active transition of an input signal, wherein detection of a zero or negative value in the accumulator (1) occurs immediately upon its establishment.

6. A circuit according to any of the preceding claims, wherein the circuit is arranged so that registration of the delay setting value, together with addition of the divisor numerator to the accumulator and triggering of the delay setting value-to-delay conversion means (5) occur immediately upon zero or negative value detection, wherein, upon expiry of the said time delay period, the state of the output signal is complemented.

7. A circuit according to any of the preceding claims, wherein the circuit is arranged so that the inverse relationship of the time delay period to the delay setting value is constructed to be such that the time delay interpolates the required timing of the output transition appropriately between active transitions of the input signal so as to yield output transitions representing exactly the required frequency division from the input signal at a 50:50 mark:space ratio.

8. A circuit according to any of the preceding claims, wherein the circuit is arranged as an integrated circuit.

9. A frequency-dividing method comprising the steps of:
providing a digital accumulator (1) capable of performing signed arithmetic and holding a value;
adding a predetermined numerator to the content of the accumulator (1);
subtracting a predetermined denominator from the content of the accumulator (1);
detecting if the value held in the accumulator (1) has become zero or negative and establishing a delay setting value dependent upon the held value;
converting the delay setting value into a time delay inversely proportional to the magnitude of the delay setting value; and
changing the state of a digital output signal on expiry of the said time delay.

10. A method according to claim 9, further comprising the initial step of setting a defined starting condition.

11. A method according to claims 9 or 10, wherein subtraction of the divisor denominator from the accumulator (1) is caused by each consecutive active transition of an input signal, wherein detection of a zero or negative value in the accumulator (1) occurs immediately upon its establishment.

12. A method according to any of claims 9 to 11, wherein registration of the delay setting value, together with addition of the divisor numerator to the accumulator and triggering of the delay setting value-to-delay conversion, occur immediately upon zero or negative value detection, wherein, upon expiry of the said time delay period, the state of the output signal is complemented.

13. A method according to claims 9 to 12, wherein the inverse relationship of the time delay period to the delay setting value is constructed to be such that the time delay interpolates the required timing of the output transition appropriately between active transitions of the input signal so as to yield output transitions representing exactly the required frequency division from the input signal at a 50:50 mark:space ratio.

## Patentansprüche

1. Frequenzteilungsschaltung, umfassend:
einen digitalen Akkumulator (1), der eine Arithmetik mit Vorzeichen ausführen kann;
Mittel (1) zum Addieren eines vorgegebenen Zählers zum Inhalt des Akkumulators;
Mittel (1) zum Subtrahieren eines vorgegebenen Nenners vom Inhalt des Akkumulators;
Mittel zum Erfassen, ob der im Akkumulator (1) gespeicherte Wert Null oder negativ geworden ist, und Festlegen eines Verzögerungseinstellwertes in Abhängigkeit des gespeicherten Wertes;
Mittel (5) zum Umwandeln des Verzögerungseinstellwertes in eine Zeitverzögerung im umgekehrten Verhältnis zur Größe des Verzögerungseinstellwertes; und
Mittel (5,6) zum Verändern des Zustandes von einem digitalen Ausgangssignal bei Ablauf der Zeitverzögerung.

2. Schaltung nach Anspruch 1, wobei die Schaltung ein Mittel zum Einstellen der Komponenten der Schaltung auf eine vorgegebene Anfangsbedingung aufweist.

3. Schaltung nach Anspruch 1 oder Anspruch 2, bei welcher die Zähler- und Nennerwerte von separaten Registern (2,3) bereitgestellt werden.

4. Schaltung nach Anspruch 1 oder Anspruch 2, bei welcher die Zähler- und Nennerwerte von einem Mikroprozessor bereitgestellt werden.

5. Schaltung nach einem der vorstehenden Ansprüche, wobei die Schaltung so angeordnet ist, daß die Subtraktion des Teilernenners von dem Akkumulator (1) durch jeden aufeinanderfolgenden aktiven Übergang eines Eingangssignals bewirkt wird, wobei die Erfassung einer Null oder eines negativen Wertes in dem Akkumulator (1) unmittelbar bei dessen Auftreten erfolgt.

6. Schaltung nach einem der vorstehenden Ansprüche, wobei die Schaltung so angeordnet ist, daß die Registrierung des Verzögerungseinstellwertes zusammen mit der Addition des Teilerzählers zu dem Akkumulator und Triggern des Verzögerungseinstellwert-zu-Verzögerung Wandlermittels (5) unmittelbar bei Erfassen einer Null oder eines negativen Wertes erfolgt, wobei der Zustand des Ausgangssignals bei Ablauf der Zeitverzögerungsperiode vervollständigt ist.

7. Schaltung nach einem der vorstehenden Ansprüche, wobei die Schaltung so angeordnet ist, daß das umgekehrte Verhältnis der Zeitverzögerungsperiode zu dem Verzögerungseinstellwert so festgelegt ist, daß die Zeitverzögerung die benötigte Zeit des Ausgangsüberganges in geeigneter Weise zwischen aktiven Übergängen des Eingangssignals interpoliert, um Ausgangsübergänge zu erzielen, welche die gewünschte Frequenzteilung von dem Eingangssignal bei einem 50:50 Tastverhältnis exakt repräsentieren.

8. Schaltung nach einem der vorstehenden Ansprüche, wobei die Schaltung als eine integrierte Schaltung ausgebildet ist.

9. Frequenzteilungsverfahren, mit den Schritten:
Bereitstellen eines digitalen Akkumulators (1), der eine Arithmetik mit Vorzeichen ausführen und einen Wert speichern kann;
Addieren eines vorgegebenen Zählers zu dem Inhalt des Akkumulators (1);
Subtrahieren eines vorgegebenen Nenners von dem Inhalt des Akkumulators (1);
Feststellen, ob der im Akkumulator (1) gespeicherte Wert Null oder negativ geworden ist, und Festlegen eines Verzögerungseinstellwertes in Abhängigkeit des gespeicherten Wertes;
Umwandeln des Verzögerungseinstellwertes in eine Zeitverzögerung im umgekehrten Verhältnis zu der Größe des Verzögerungseinstellwertes; und
Verändern des Zustandes eines digitalen Ausgangssignals bei Ablauf der Verzögerungszeit.

10. Verfahren nach Anspruch 9, welches ferner den anfänglichen Schritt des Einstellens einer definierten Anfangsbedingung umfaßt.

11. Verfahren nach Anspruch 9 oder 10, bei welchem eine Subtraktion des Teilernenners von dem Akkumulator (1) durch jeden nachfolgenden aktiven Übergang eines Eingangssignals bewirkt wird, wobei eine Erfassung von einer Null oder eines negativen Wertes in dem Akkumulator (1) unmittelbar bei dessen Auftreten erfolgt.

12. Verfahren nach einem der Ansprüche 9 bis 11, bei welchem eine Registrierung des Verzögerungseinstellwertes zusammen mit einer Addition des Teilerzählers zu dem Akkumulator und ein Triggern der Umwandlung von Verzögerungseinstellwert zu Verzögerung unmittelbar bei Erfassen einer Null oder eines negativen Wertes erfolgt, wobei der Zustand des Ausgangssignals bei Ablauf der Zeitverzögerungsperiode vervollständigt wird.

13. Verfahren nach einem der Ansprüche 9 bis 12, bei welchem das umgekehrte Verhältnis von Zeitverzögerungsperiode zu dem Verzögerungseinstellwert so festgelegt ist, daß die Zeitverzögerung die benötigte Zeit des Ausgangsüberganges in geeigneter Weise zwischen aktiven Übergängen des Eingangssignals interpoliert, um Ausgangsübergänge zu erzielen, welche die gewünschte Frequenzteilung von dem Eingangssignal bei einem 50:50 Tastverhältnis exakt repräsentieren.

## Revendications

1. Circuit de division de fréquence comprenant :
un accumulateur numérique (1), capable d'effectuer une arithmétique avec signe ;
un moyen (1) destiné à additionner un numérateur prédéterminé au contenu de l'accumulateur ;
un moyen (1) destiné à soustraire un dénominateur prédéterminé du contenu de l'accumulateur ;
un moyen destiné à détecter si la valeur contenue dans l'accumulateur (1) est devenue nulle ou négative et à établir une valeur de réglage de retard fonction de la valeur contenue ;
un moyen (5) destiné à convertir la valeur de réglage de retard en un temps de retard inversement proportionnel à l'amplitude de la valeur de réglage de retard ; et
un moyen (5, 6) destiné à changer l'état d'un signal numérique de sortie à l'expiration du temps de retard.

2. Circuit selon la revendication 1, dans lequel le circuit comprend un moyen destiné à mettre les composants du circuit dans un état de départ défini.

3. Circuit selon la revendication 1 ou la revendication 2, dans lequel les valeurs de numérateur et de dénominateur sont fournies à partir de registres (2, 3) distincts.

4. Circuit selon la revendication 1 ou la revendication 2, dans lequel les valeurs de numérateur et de dénominateur sont fournies à partir d'un microprocesseur.

5. Circuit selon l'une quelconque des revendications précédentes, dans lequel le circuit est agencé de façon que la soustraction, de l'accumulateur (1), du dénominateur de diviseur est provoquée par chaque transition active successive d'un signal d'entrée, dans lequel la détection d'une valeur nulle ou négative dans l'accumulateur (1) se produit immédiatement lors de son établissement.

6. Circuit selon l'une quelconque des revendications précédentes, dans lequel le circuit est agencé de façon que l'enregistrement de la valeur de réglage de retard, conjointement avec l'addition, à l'accumulateur, du numérateur de diviseur et le déclenchement du moyen (5) de conversion, en retard, de la valeur de réglage de retard, se produise immédiatement lors de la détection d'une valeur nulle ou négative, dans lequel, à l'expiration de ladite période de temps de retard, l'état du signal de sortie est complémenté.

7. Circuit selon l'une quelconque des revendications précédentes, dans lequel le circuit est agencé de façon que la relation inverse de la période de temps de retard à la valeur de réglage de retard soit construite pour être telle que le temps de retard interpole le cadencement voulu de la transition de sortie de façon appropriée entre des transitions actives du signal d'entrée, de façon à donner des transitions de sortie représentant exactement la division de fréquence voulue à partir du signal d'entrée à un rapport cyclique de 50:50.

8. Circuit selon l'une quelconque des revendications précédentes, dans lequel le circuit est agencé comme un circuit intégré.

9. Procédé de division de fréquence comprenant les étapes consistant :
à se procurer un accumulateur numérique (1) capable d'effectuer une arithmétique avec signe ;
à additionner un numérateur prédéterminé au contenu de l'accumulateur (1) ;
à soustraire un dénominateur prédéterminé du contenu de l'accumulateur (1) ;
à détecter si la valeur contenue dans l'accumulateur (1) est devenue nulle ou négative et à établir une valeur de réglage de retard fonction de la valeur contenue ;
à convertir la valeur de réglage de retard en un temps de retard inversement proportionnel à l'amplitude de la valeur de réglage de retard ; et
à changer l'état d'un signal numérique de sortie à l'expiration dudit temps de retard.

10. Procédé selon la revendication 9, comprenant en outre l'étape initiale consistant à fixer un état de départ défini.

11. Procédé selon les revendications 9 ou 10, dans lequel la soustraction, de l'accumulateur (1), du dénominateur de diviseur est provoquée par chaque transition active successive d'un signal d'entrée, dans lequel la détection d'une valeur nulle ou négative dans l'accumulateur (1) se produit immédiatement lors de son établissement.

12. Procédé selon l'une quelconque des revendications 9 à 11, dans lequel l'enregistrement de la valeur de réglage de retard, conjointement avec l'addition, à l'accumulateur, du numérateur de diviseur et le déclenchement de la conversion, en retard, de la valeur de réglage de retard, se produit immédiatement lors de la détection d'une valeur nulle ou négative, dans lequel, à l'expiration de ladite période de temps de retard, l'état du signal de sortie est complémenté.

13. Procédé selon les revendications 9 à 12, dans lequel la relation inverse de la période de temps de retard à la valeur de réglage de retard est construite pour être telle que le temps de retard interpole le cadencement voulu de la transition de sortie de façon appropriée entre des transitions actives du signal d'entrée, de façon à donner des transitions de sortie représentant exactement la division de fréquence voulue à partir du signal d'entrée à un rapport cyclique de 50:50.
